# EUROPEAN PATENT APPLICATION

(11) **EP 1 903 484 A1**
(43) Date of publication of application: **26.03.2008**
(21) Application number: 06300954.2
(22) Date of filing: 14.09.2006
(51) Int. Cl.: G06Q 10/00

(54) **Method and apparatus for recommending simplified fares with consistent buy-across**

(71) Applicant: Amadeus s.a.s, 06410 Biot (FR)
(72) Inventor: Viard, Nicolas c/o Office Mediterraneen Brevets D'Invention et de Marques, NICE 06000 (FR); Voute, Pierre c/o Office Mediterraneen Brevets D'invention et de Marques, NICE 06000 (FR); Tisserand, Benoît c/o Office Mediterraneen Brevets D'Invention et de Marques, NICE 06000 (FR); Maameri, Mamar c/o Office Mediterraneen Brevets D'Invention et de Marques, NICE 06000 (FR)
(74) Representative: Decobert, Jean-Pascal

(57) **Abstract**

A system and method of retrieving and displaying travel data receives at a computing apparatus data representing a set of recommended travel itineraries. At least one recommended itinerary has a recommended booking class belonging to a predefined group of booking classes. A computing apparatus identifies a reference booking classes that is associated with the recommended booking class. The apparatus computes a fare value for the recommended itinerary based on a fare value of the associated booking class in the reference group plus a buy-across value. The predefined group may have fewer booking classes than the reference group, and most preferably has a single booking class.

## Description

### Background of the Invention

### 1. Field of the Invention

The invention is useful in the field of data processing and in particular to transportation reservation methods and systems for selecting, pricing, and purchasing travel services.

### 2. Discussion of Background Information

A Computerized Reservation System (CRS) is a computer system that allows access to travel-related fares, schedules, and availability. They also offer the capability of booking reservations and generating tickets. A Global Distribution System (GDS) is a Computerized Reservation System that includes reservation databases of suppliers in many countries. A supplier, also referred to as a travel provider, is a company providing travel services to the public, such as an airline, railroad, cruise line, etc.
Availability is a supplier's inventory of seats, rooms, cabins, etc., that can be sold or reserved as of the time of a traveler's inquiry. CRSs and GDSs typically provide a capability for searching the availability of accommodations that satisfy a passenger's specific travel criteria.

A fare is a price charged for a travel service. Suppliers may set fares according to their individual pricing and marketing policies. A CRS or GDS in turn quotes fares to the public according to the policies of the respective suppliers.

Airlines typically offer a variety of fares for any particular flight. Fares may differ according to the class of service (e.g., "first" class, "business" class, and "economy" or "coach" class) and other conditions which may include, by way of example:
- one-way or round trip travel;
- travel day(s) of week;
- advance reservation period (e.g., more than 14 days before scheduled travel date);
- permissibility of stopovers;
- permissibility of open-jaw travel (i.e., a trip that has no air travel between two points on the itinerary);
- permissibility of transfers;
- permissibility of combinations;
- blackout dates and other travel restrictions; and
- penalties for cancellations and changes.

A booking class, sometimes called a fare class, is a class of service with a particular set of conditions. By way of example, an airline might offer a fully-refundable ticket for coach-class service with relatively few restrictions as a first booking class. The airline additionally might offer a non-refundable ticket for coach-class service with many restrictions as a different booking class.

Airlines have varied practices for constructing booking classes. Frequently, an airline will construct booking classes directed to different market segments, such as vacation travelers, business travelers, etc. Vacation travelers tend to seek relatively lower fares and in exchange are willing to accept relatively more restrictions. Business travelers tend to seek greater travel flexibility (fewer restrictions) and in exchange are willing to accept higher fares. Airlines may further segment their markets and construct different booking classes targeted to different sub-markets. As a result, it is not uncommon for a major airline using large commercial aircraft to have up to twenty or more booking classes for one flight.

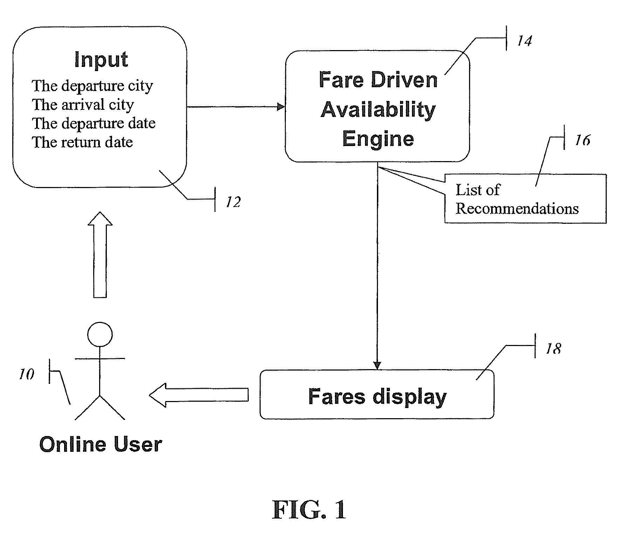

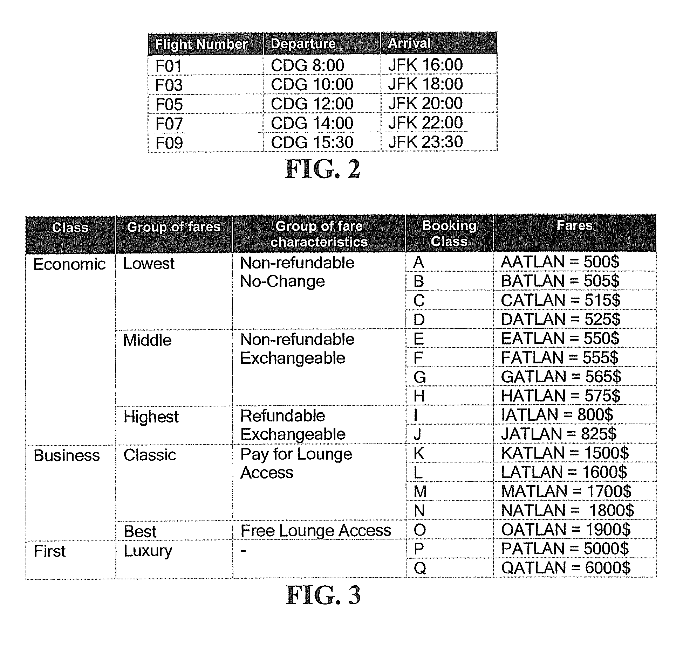

FIG. 1 illustrates a process flow for obtaining information about fares and availability for a proposed trip. A user 10 selects input criteria 12 for a travel itinerary. Typical itinerary criteria may be a departure city, an arrival city, a departure date, and a return date. A variety of other criteria may be used, such as restrictions on choice of airline, class of service, or relaxation of limits on travel dates.

An availability engine 14 selects a list of recommended accommodations 16 in response to the user-supplied criteria 12. The list of accommodations 16 and associated fares are provided to the user 10 on a display 18. The display 18 may be a personal computer having a World Wide Web browser. The list of recommended accommodations may be communicated to the browser over the Internet or by other communication channel. Availability engines use a variety of techniques to select accommodations for display to a prospective traveler.

FIG. 2 illustrates an exemplary schedule of flights for a hypothetical airline offering air service from John F. Kennedy (JFK) airport in New York, USA, to Charles DeGaulle (CDG) airport in Paris, France. The schedule consists of five daily flights F01, F03, F05, F07 and F09 with departure and arrival times as shown in the figure. Only east-bound flights are shown.

FIG. 3 illustrates a table of exemplary booking classes and fares for the flights of FIG. 2. This example shows seventeen booking classes designated by letters "A" through "Q" in the column titled "Booking Class." The example shows three classes of service designated as "Economic," "Business," and "First" in the column titled "Class." The service classes depend on the specifics of the equipment (aircraft) nominally assigned to serve the route. In this example, the airline has constructed ten booking classes for Economic-class service, designated by letters "A" through "J" in the column titled "Booking Class." The airline has constructed five booking classes for Business-class service, designated by letters "K" through "O," and two booking classes for First-Class service, designated by letters "P" and "Q."

FIG. 3 also illustrates groupings of booking classes. The airline has designated six groups called "Lowest," "Middle," "Highest," "Classic," "Best," and "Luxury" in a column titled "Group of Fares." Three groups pertain to Economic-class service ("Lowest," "Middle," and "Highest"). Two groups pertain to Business-class service ("Classic" and "Best"), and a single group pertains to First-class service ("Luxury").

The groups of booking classes differ in various restrictions. The four booking classes in the "Lowest" group ("A" through "D") are non-refundable and non-exchangeable as shown in a column titled "Group of Fare Characteristics." In contrast, fares for the four booking classes in the "Middle" group ("E" through "H") are exchangeable. Fares for the two booking classes in the "Highest" group ("I" and "J") are refundable and exchangeable. The single booking class in the "Best" group gives the traveler access to a lounge without further cost, while passengers booked in any of the four booking classes in the "Classic" Business-class group must pay separately for lounge access. These booking classes are merely exemplary. Travel providers have a wide range of practices in defining booking classes.

Within each group of booking classes, individual booking classes may differ in other respects. Each individual booking class has a fare as shown in the column titled "Fares."

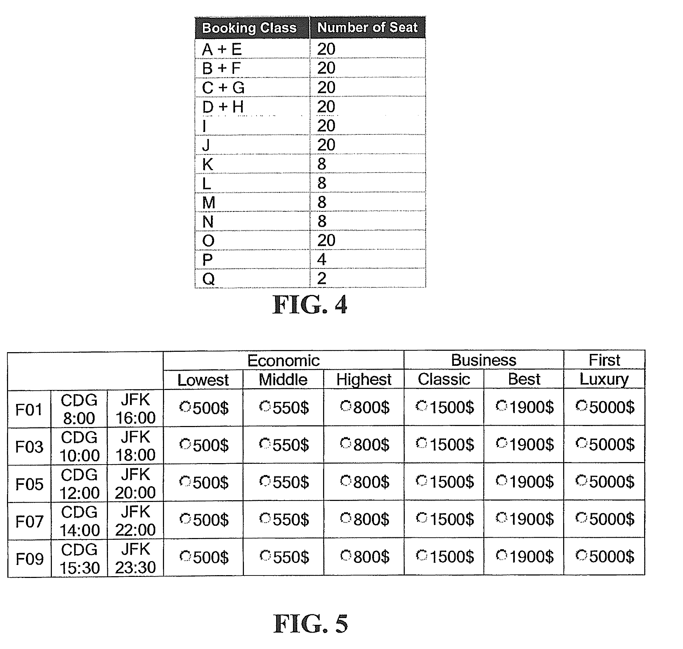

FIG. 4 illustrates an airline's initial assignment of seat inventory to the booking classes of FIG. 3. In this example, the equipment (aircraft) assigned to the route has 178 seats allocated to booking classes as shown in the figure. For example, the airline has limited the total number of seats that can be sold under booking classes "A" and "E" jointly to 20. Thus, if 15 passengers are ticketed under booking class "A", only 5 could be ticketed under booking class "E." (Airlines sometimes engage in overbooking and inventory management, but such practices are not discussed here.)

Modern air fare pricing is complex. Differing airlines may use different practices depending on their respective competitive and market strategies. Those practices may be subject to various regulatory, economic, and other constraints. The nature of travel demand is probabilistic in that the traveling public may increase or decrease demand for air travel. They may cancel or change travel plans, miss flights, etc., in ways that are seemingly random to the airline. Low-cost booking classes may have prices that are less than the average, per-person cost of service, while high-cost booking classes may have prices that are greater than the average, per-person cost of service. Revenue for a booking class can be calculated as the sold inventory multiplied by the fare for the respective booking class. Total revenue for a full aircraft would be the sum of revenues for all booking classes. It is necessary for airlines to limit the number of tickets available at the lowest fare levels in order to cover the total cost of service.

Over time, some booking classes may become exhausted, and further bookings under those booking classes may not be allowed. For example, vacation travelers tend to reserve low-cost fares far in advance of the travel date. Less expensive booking classes tend to close earliest, and inquiries by last-minute travelers tend to find availability only for more expensive booking classes. While this may have an appearance of rising prices, it is a consequence of exhaustion of low-price inventory.

FIG. 5 illustrates an exemplary display of a table of fares and availabilities for the flights of Figs. 2-4 at a time when tickets are available in all booking classes. Entries in the first column identify flights. Entries in the top rows designate service classes and groups of fares within those service classes. The cells display the lowest fares available from each group of fares for each flight. The display may include a "radio button" symbol (circle) which, in a web browser display, allows a user to select a particular cell for further processing, such as purchasing a ticket.

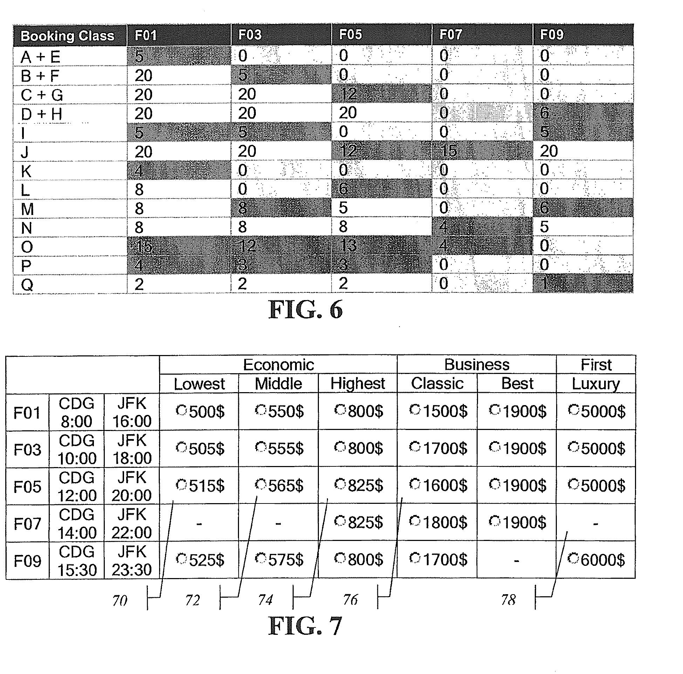

FIG. 6 illustrates a table of availabilities at a time when seat inventory has been partially sold. Entries in the left column identify booking classes. Some booking classes may share inventory, such as classes "A+E," "B+F," "C+G," and "D+H." Entries in the top row identify flights. Cell entries indicate inventory of seats available to be sold in each booking class for each flight. An entry of zero indicates that no inventory is available and a booking class has been closed. For example, in the column for flight F05, there is no availability for booking classes "A+E," "B+F," "I," or "K."

FIG. 7 illustrates an exemplary display of a table of fares and availabilities for the flights Figs. 2-4 at a time when availability is as shown in FIG. 6. For flight F05, the cell 70 for the "Lowest" group displays a fare of 515$. This is because there is no availability for booking classes A or B for this flight, as shown in FIG. 6. Booking classes "C" and "D" have availability (12 and 20 seats respectively). From FIG. 3, booking class "C" has the lower fare (515$), and this is the fare that appears in the cell 70 (FIG. 7). The cell 72 for the "Middle" group displays a fare of 565$ based on availability in booking class "G." (Booking classes "E" and "F" were closed.) The cell 74 for the "Highest" group displays a fare of 825$ based on availability in booking class "J." (Booking class "I" was closed.) The cell 76 for the "Classic" Business-class service group displays a fare of 1600$ based on availability in booking class "L." (Booking class "K" was closed.) For flight F07, the cell 78 for the "Luxury" group displays no fare. This is because there is no availability for booking class "P" or "Q."

In the example of Figs. 2-4, the airline has chosen to share inventory between booking classes of the "Lowest" and "Middle" groups. There is a one-to-one correspondence between booking classes of the two groups. That is, there is a pairing of booking classes "A" and "E," "B" and "F," "C" and "G," and "D" and "H." The price difference between booking classes of each pair is exactly the same -- $50 in this example. In circumstances such as this, it is possible to price fares as a "buy-across." That is, the fare in the more expensive group may be a fixed increment above the price of a corresponding fare in the less expensive group.

### Summary

It is not generally practical to price fares as a buy-across because of the variety and complexity of practices for constructing booking classes and pricing. For the example of FIG. 3, while there may be a one-to-one correspondence between the four booking classes of the "Lowest" and "Middle" groups, there is not such a one-to-one correspondence between the Lowest and Highest groups, nor is there such a correspondence between the Classic and Best groups. This may arise because of marketing, economic, regulatory, or other constraints that affect the construction of booking classes. There is significant cost to an airline to expand an existing set of booking classes to have a one-to-one correspondence with reference groups. The costs arise in part from internal expenses in analyzing and maintaining additional booking classes, as well as complications in publishing and disseminating information about fare classes.

An object of the invention is to provide an improved computing interface between a centralized database of travel information and users worldwide.

A further object of the invention is to provide an improved computer system for disseminating travel information.

A further object of the invention is to provide an improved computer system for processing complex travel data from a plurality of independent data suppliers for use by a plurality of independant data users.

These and other objects are achieved in a novel system and method that facilitates processing, communication and display of travel information to an end user. Suppliers of travel data define and provide for storage in a database a first group of booking class data, additional groups of booking class data, and availability data for the booking classes. An availability engine searches the database for booking classes with availability and recommends travel data satisfying availability and other search criteria. For each recommendation generated by the availability engine in a certain group (referred to here as a deduced group), a computing apparatus identifies a corresponding fare value in the reference group. The apparatus computes a fare for the booking class of the deduced group as the fare of the corresponding booking class of the reference group plus a buy-across value. A travel provider may define a single booking class for a deduced group and perform a buy-across calculation from the booking class of the reference group with the lowest available fare.

Other exemplary embodiments and advantages of the present invention may be ascertained by reviewing the present disclosure and the accompanying drawings.

### Brief Description of the Drawings

The present invention is further described in the detailed description which follows, in reference to the noted plurality of drawings by way of non-limiting examples of certain embodiments of the present invention, in which like numerals represent like elements throughout the several views of the drawings, and wherein:
FIG. 1 illustrates a process flow for recommending travel itineraries;
FIG. 2 illustrates an exemplary schedule of flights for a hypothetical airline offering service from JFK airport in New York, USA, to Charles DeGaulle airport in Paris, France;
FIG. 3 illustrates an exemplary booking class structure for the flights of FIG. 2;
FIG. 4 illustrates an initial assignment of seat inventory to booking classes of FIG. 3;
FIG. 5 illustrates an exemplary display of a table of fares for the schedule of Figs. 2-4 at a time when seats are available to be sold in all booking classes;
FIG. 6 illustrates a table of availabilities at a time when seat inventory has been partially sold;
FIG. 7 illustrates an exemplary display of a table of fares for the schedule of Figs. 2-4 at a time when seat availability is as shown in FIG. 6;
FIG. 8 illustrates an improved process flow for recommending travel itineraries;
FIG. 9 illustrates a table of buy-across values;
FIG. 10 illustrates a simplified fare structure;
FIG. 11 illustrates a display of fares under the availability conditions of FIG. 6, but using a consistent buy-across;
FIG. 12 illustrates a network architecture suitable for implementing a consistent buy-cross service.

### Detailed Description of Exemplary Embodiments

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description taken with the drawings making apparent to those skilled in the art how the several forms of the present invention may be embodied in practice.

As part of the setup for performing a consistent buy-across as discussed below, an airline establishes booking classes and groups of booking classes for flights. Methods for doing this are presently known, but the invention is not limited to currently-known practices. In addition, the airline designates one group as a "reference" group for one or more other groups. For each other group for which a buy-across will be used, the airline further designates a buy-across value. The buy-across value may be different for each non-reference group. The airline also defines associations between booking classes of the reference group and booking classes of non-reference groups.

For example, if an airline designates two groups for coach-class accommodations, where the first group is characterized by non-refundable fares and the second group is characterized by refundable fares, the airline might designate a buy-across value as a marginal economic value to it for refundability. An airlines may use a variety of criteria for designating groups, and the airline may select buy-across values commensurately with the criteria.

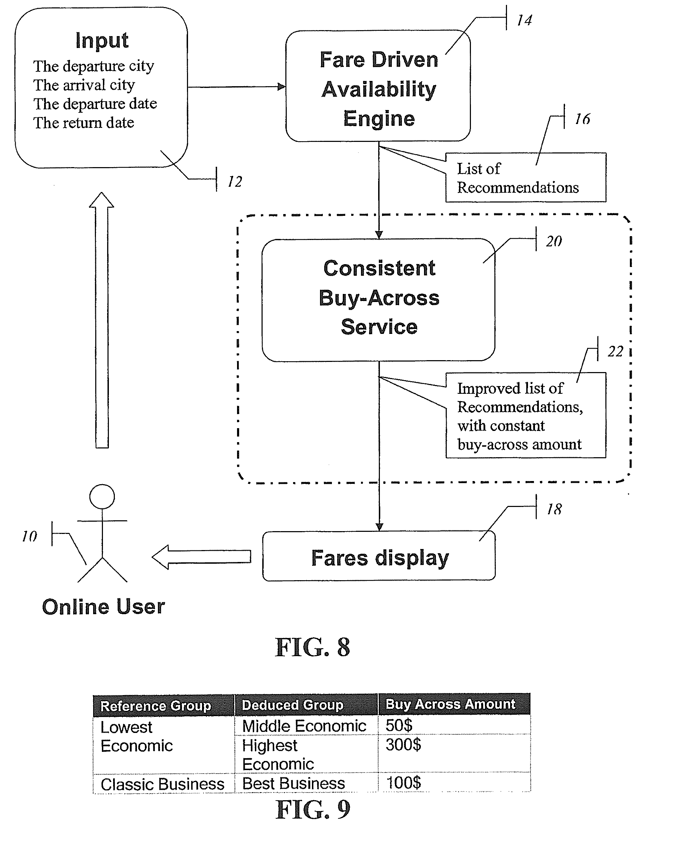

FIG. 8 illustrates a process flow for recommending travel accommodations with consistent buy-across. Similar to some aspects of the process illustrated in FIG. 1, a user 10 selects criteria 12 for a travel itinerary. An availability engine 14 selects a list of recommended itineraries 16 that satisfy the user-supplied travel criteria. The search algorithm may be of any type, provided that it return booking classes from at least two groups. Unlike the process of FIG. 1, a buy-across service 20 processes the list of recommended itineraries 16 to generate an improved list of itineraries 22 with a consistent buy-across amount. For each booking class in the list of recommendations 16, the buy-across service 20 performs a number of processes, as discussed further below.

The buy-across service 20 checks whether a recommended booking class is part of the reference group of booking classes. If so, the buy-across service 20 passes the fare on for display to the user 10. The buy-across service can determine whether the booking class is part of a reference group in any of several ways. The association may be a pre-programmed rule, or the GDS can communicate this information to the buy-across service 20 along with the list of recommendations. Alternately, the buy-across service 20 may make a separate query to the GDS.

Assuming the recommended booking class is not part of the reference group of booking classes, the buy-across service searches for an associated booking class from the reference group. The associated booking class may be the booking class of the reference group with the lowest available fare. If the reference group lacks an associated booking class, the buy-across service 20 passes the fare of the recommended booking class on for display to the user 10. The buy across service 20 may obtain information about the associations among booking classes in a variety of ways. The GDS can communicate information about booking class association to the buy-across service 20 along with the list of recommendations or in response to a separate query.

Assuming the buy-across service identifies an associated booking class in the reference group, the buy-across service computes a new fare for the recommended booking class. The new fare is the fare of the associated booking class in the reference group plus the buy-across value. Said mathematically, the new fare is: $Y = $X + $B, where:
$Y is the new fare of the recommended booking class,
$X is the fare of the associated booking class in the reference group, and
$B is the buy-across value.

The "zap-off" amount is: $Z = ($Y - ($X + $B)),
where $Z is the zap-off amount, and the other variables are as defined above.

The buy-across service 20 communicates the new fare of the recommended accommodation to the user 10. If the user 10 ultimately makes a booking for the recommended booking class, the buy-across service applies a "zap off" to the fare of the recommended booking class to adjust it to the new fare. That is, the buy-across service 20 performs a pre-defined transaction with the CRS or GDS to adjust the fare of the recommendation.

FIG. 9 illustrates a table of buy-across values for the example of FIGS. 2-4. In FIG. 9, the airline has designated the "Lowest" group as the reference group for the "Middle" and "Highest" groups in the Economic class of service. The buy-across amounts are 50$ and 300$ respectively. The airline has also designated the "Classic" group as the reference group for the "Best" group in the Business class of service, with a buy-across value of $100.

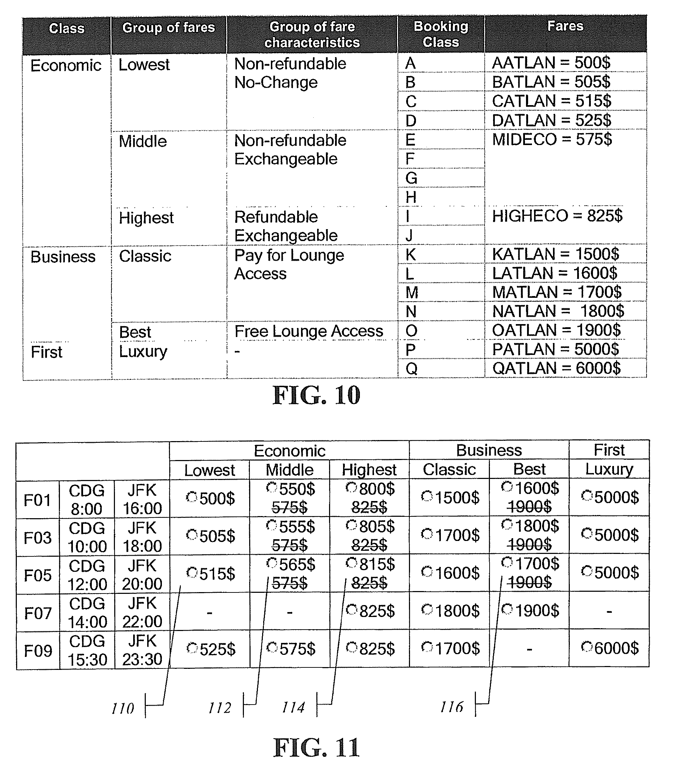

FIG. 10 illustrates a simplified fare structure for use with the buy-across service described above. It is similar to the fare structure of FIG. 3. Notably different is the single fare, "MIDECO" for the entire "Middle" group. Similarly, the fare structure of FIG. 10 has a single fare, "HIGHECO," for the "Highest" group. An airline may choose fares for the MIDECO and HIGHECO classes according to its own pricing methodologies. By comparing the examples shown in FIG. 1 with that of FIG. 3, the MIDECO price (575$) equals the highest fare in the "MIDDLE" group (i.e., that of booking class "H").

FIG. 11 illustrates a display of fares under the availability conditions of FIG. 6, but using a consistent buy-across as described above. For comparison purposes, cell entries also show in strike-out font the fares that would have been quoted under the method described with respect to FIG. 7. It should be understood that the fares shown in strikeout font would not actually be disclosed to potential customers. They are shown here only to facilitate explanation.

By way of illustration in FIG. 11, flight F05 displays a fare of 515$ in the cell 110 for the "Lowest" group. This results from availability for booking class "C" as shown in Fig. 6 (showing 12 seats available). Booking class "C" is in a reference group, and the buy-across service passes on the fare unchanged for display to the user.

The display for flight F05 shows a fare of 565$ in the cell 112 for the "Middle" group. For the availability of FIG. 6, the availability engine would return a recommended booking class G with a fare "MIDECO." The airline has designated the "Lowest" group as the reference group for the Middle group (FIG. 9). The buy-across service searches the reference group ("Lowest") for the booking class with the lowest available fare, which from FIG. 6 is booking class "C" (515$). The buy-across service calculates a new price for the MIDECO booking class as the fare for booking class "C" (515$) plus the buy-across value of 50$ (FIG. 9). This calculation results in the displayed fare "MIDECO" with a price of 565$.

The display for flight F05 shows a fare of 815$ in the cell 114 for the "Highest" group. The airline has designated the "Lowest" group as the reference group for the "Highest" group. The buy-across service associates the HIGHECO booking class with booking class "C" based on its availability (12 seats) and price (515$). The buy-across service computes a price for the HIGHECO fare as the fare for booking class "C" (515$) plus the buy across value of 300$
(FIG. 9).

The display for flight F05 shows a fare of 1700$ in the cell 116 for the "Best" group. The airline has designated the "Classic" group as the reference group for the "Best" group. The buy-across service associates the booking class "O" of the "Best" group with booking class "N" of the "Classic" group based on the availability (4 seats) and price (1800$) for booking class "N." The buy-across service computes a fare for booking class "O" as the fare for class "N" (1800$) plus the buy across value of 100$ (FIG.9).

The buy-across method disclosed above may be extended to itineraries having connecting flights. For example, if a user seeks transportation from Heathrow airport, London, England (LHR), to JFK airport in New York, USA, an availability engine might recommend itineraries on flights connecting at Charles DeGaulle airport, i.e., a flight from Heathrow to Charles DeGaulle airport (CDG) with a connecting flight from Charles DeGaulle to JFK. For purposes of example, the airline might have a flight schedule between Charles DeGaulle and JFK as shown in FIG 2, buy-across values as shown in FIG. 9, and booking classes as shown in Fig. 10. There might be availability in all booking classes except "I" in the "Highest" group. For connecting flights between Heathrow and Charles DeGaulle, the airline might have availability in a "Lowest" group booking class BEURO with a fare of 100$, and in a "Highest" group booking class HIGHECOEU with a fare of 200$. The availability engine then might return a reference fare in the "Lowest" group for the two-flight segment (LHR-CDG-JFK) of $600 that would result as the sum of 500$ for an AATLAN fare plus 100$ for a BEURO fare. That "Lowest" group fare would be the reference for a buy-across. Assuming availability in booking classes "J" (CDG-JFK) and HIGHECOEU (LHR-CDJ) the availability engine might recommend a "Highest" group price of 1025$, that would result as a sum of 825$ for a HIGHECO fare plus 200$ for a HIGHECOEU fare. However, the buy-across service would compute a price for a "Highest" group fare of 900$, which would result as a sum of 600$ (from the "Lowest" group fare) plus a buy-across value of $300 (from Fig. 9).

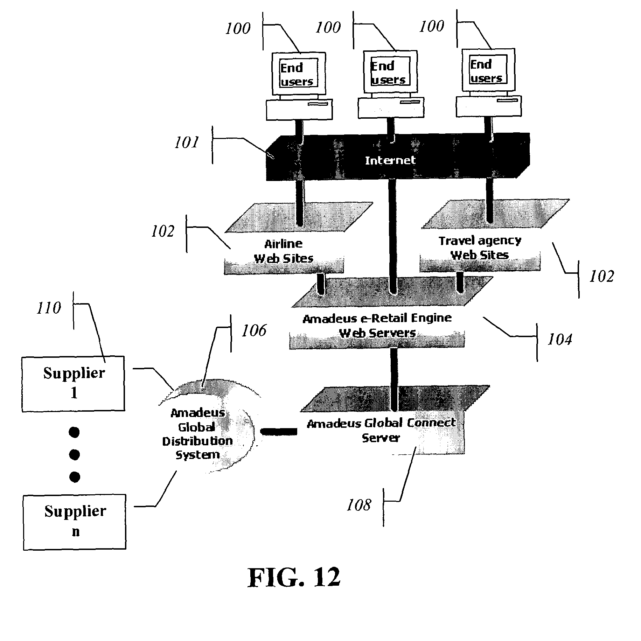

FIG. 12 illustrates a system architecture for implementing a buy-across service as discussed above. End users interact with computer terminals 100 to make a request for recommendations for a trip. The terminals may be general purpose personal computers with browsers, but it will be appreciated that a variety of electronic devices could provide appropriate displays and communications capability. The terminals 100 preferably communicate over a public network 101, such as the Internet, with one or more web servers 102 that serve web pages, manage communications, and may perform other functions. The web servers 102 may, for example, host retail e-commerce web sites for travel agents or airlines. The web servers 102 may in turn communicate with a retail engine server 104 that manages communications and acts as a middle layer between the web servers 102 and a GDS 106. Alternately, end user terminals 100 may communicate directly with the retail engine server 104. The retail engine server 104 serves as an interface to a GDS and may communicate with the GDS through an intermediate communication server 108. The intermediate communication server 108 may, for example, consolidate traffic from other sources not associated with retail transactions. The retail engine server 104 preferably performs the functions of the buy-across service. A plurality of suppliers 110 provide travel data for storage in the GDS 106.

In one arrangement, the intermediate communication server 108 and retail engine server 104 may be operated in relative proximity to the computers of the GDS. A large number of Web servers 102 and end-user terminals 100 may be located around the world. This architecture facilitates worldwide communication to the GDS and is convenient for consolidating and managing high volumes of retail traffic to the GDS. However, it will be appreciated by those skilled in the art that other network architectures may be used.

It is noted that the foregoing examples have been provided merely for the purpose of explanation and are in no way to be construed as limiting of the present invention. While the present invention has been described with reference to certain embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular means, materials and embodiments, the present invention is not intended to be limited to the particulars disclosed herein; rather, the present invention extends to all functionally equivalent structures, methods and uses, such as are within the scope of the appended claims

## Claims

1. A system for storing, retrieving, and communicating travel information comprising:
a plurality of travel data suppliers [110], at least one travel data supplier defining a plurality of booking classes where (a) each booking class is associated with a fare value and an availability value, (b) a first set of booking classes is associated together as a reference group, (c) a second set of booking classes is associated together as a second group, (d) the second group is associated with the reference group, (e) the number of booking classes in the second group is potentially unequal with the number of booking classes in the reference group, and (f) a buy-across value is associated with the reference group and with the second group;
a database [106] storing the booking classes, fare values, reference group, second group, and buy-across value and being capable of searching the database to retrieve selected travel data including at least one booking class of the reference group, a booking class of the second group, and a fare associated with a booking class of the reference group; and
an interface [104] between the database [106] and end users [100], said interface computing a fare for a retrieved itinerary based upon the fare associated with the booking class of the reference group and the buy-across value.

2. The system of claim 1 wherein the interface [104] further conducts an electronic transaction with the database [106] that results in a reduction in an availability value of a booking class of the second group in response to a communication from an end user 100.

3. The system of claim 2 wherein the electronic transaction records the fare computed, by the interface.

4. The system of claim 1 wherein the fare associate with the reference group is the lowest fare of a booking class in the reference group with a non-zero availability.

5. An interface for a system for storing, retrieving, and communicating travel information; said system including a plurality of travel data suppliers [110], at least one travel data supplier defining a plurality of booking classes where (a) each booking class is associated with a fare value, (b) a first set of booking classes is associated together as a reference group, (c) a second set of booking classes is associated together as a second group associated with the reference group, (d) the number of booking classes in the second group is potentially unequal with the number of booking classes in the reference group, and (e) a buy-across value is associated with the reference group and with the second group; said system further including a database [106] storing the booking classes, fare values, reference group, second group, and buy-across value and capable of retrieving selected travel data including at least one booking class of the reference group and a fare associated with a booking class of the reference group; said interfacing computing a fare based upon the fare associated with the booking class of the reference group and the buy-across value.

6. The interface of claim 5 further **characterized by** a capability to conduct an electronic transaction with the database [106] that results in a reduction in an availability value of a booking class of the second group in response to a communication from an end user [100].

7. The interface of claim 6 wherein the electronic transaction records the fare computed by the interface.

8. The system of claim 5 wherein the fare associate with a booking class of the reference group is the lowest fare of a booking class in the reference group with a non-zero availability.

9. A method for retrieving and displaying travel information stored in a database, said database including (a) a plurality of booking classes, (b) a reference group having a plurality of the booking classes (c) a second group of the booking classes, the number of booking classes in the second group being potentially different from the number of booking classes in the reference group, and (d) a buy-across value associated with the reference group and the second group; said method comprising steps of:
receiving at a computing apparatus at least one fare of a booking class of the reference group, a booking class from the second group, and the buy-across value;
computing a fare value for an itinerary based on a sum of the fare of the booking class of the reference group plus a buy-across value; and
transmitting to a user a fare value based on the buy-across value.

10. The method of claim 9 further including a step of conducting an electronic transaction between the computing apparatus and the database [106] that results in a reduction in an availability value of a booking class of the second group.

11. The method of claim 10 wherein the electronic transaction records the fare computed at the computing apparatus.

12. The method of claim 9 wherein the fare of the booking class of the reference group is the lowest fare of a booking class in the reference group with a non-zero availability.

13. A method of pricing a travel itinerary comprising:
receiving at a computing apparatus a recommended travel itinerary that includes a recommended booking segmentation belonging to a predefined group of booking segmentations;
computing a fare for the recommended travel itinerary that is based on a fare of a reference group of booking segmentations and a buy-across value.

14. A system for storing, retrieving, and communicating travel information; said system including a database [106] storing segmentation classes; said interfacing computing a fare based upon a fare associated with a segmentation class and a buy-across value.
